# EUROPEAN PATENT SPECIFICATION

(11) **EP 0 366 477 B1**
(45) Date of publication and mention of the grant of the patent: **31.03.1993**
(21) Application number: 89311084.1
(22) Date of filing: 27.10.1989
(51) Int. Cl.: C02F 3/08

(54) **Rotary biological contactor**
Rotierfähiger biologischer Tauchtropfkörper
Contacteur biologique rotatif

(30) Priority: 27.10.1988 GB 8825134
(43) Date of publication of application: 02.05.1990
(73) Proprietor: ENERGY AND WASTE SYSTEMS LIMITED, Westbury, Wiltshire BA13 4ER (GB)
(72) Inventor: Walpole, Terence Frederick, Ash Nr Aldershot Hampshire (GB)
(74) Representative: White, Martin David

(56) References cited:
- EP-A- 0 185 542
- US-A- 4 345 997
- US-A- 4 385 987
- US-A- 4 444 658
- US-A- 4 537 678

## Description

### Background

This invention relates to a rotary biological contactor.

Rotary biological contactors are well known for biological treatment of fluid, for example, fluid sewage.

A known type of rotary biological contactor ("RBC") comprises several blocks of plastic media arranged in the form of a plurality of axially-spaced-apart rings, with several such blocks in each ring, mounted to or supported on a framework to rotate about a horizontal axis. Each block is in the form of a stack of sheets of plastic media, adjacent pairs of said sheets defining channels therebetween for the fluid to flow through which is being treated. Biological matter, known as "biomass", grows on the plastic media in the presence of the fluid to be treated by the biomass. The rotation of the RBC causes alternate exposure of the biomass to the fluid and to the surrounding air, whereby the treatment of the fluid by the biomass is enhanced.

EP-A-0 185 542 US-A-4 444 658 and US-A-4 385 987 each discloses a rotary biological contactor comprising a plurality of blocks of plastic media arranged in the form of a plurality of axially distributed rings with a plurality of said blocks in each respective ring, the blocks being mounted to or supported on a framework to rotate about a horizontal axis, an axially-extending shaft on said axis supporting the framework, each block being in the form of a stack of sheets of plastic media, adjacent pairs of said sheets defining, between them, channels for fluid-flow, wherein the framework comprises a plurality of axially-spaced-apart frames, each said ring of blocks being located between an associated pair of said frames, each frame comprising a plurality of radial arms and at least one interconnecting member extending between the radial arms, the framework comprising axially extending support members, said support members being supported by the frames, said support members extending through holes in, and thereby supporting, the stack of sheets in each block, the radial arms being bolted to flanges on the shaft.

### Summary Of Invention

The invention provides a rotary biological contactor according to each of claims 1 to 7.

### Objects And Advantages Of Invention

These will be apparent from the description which follows of a rotary biological contactor, reference being made to drawings as follows:-

### The Drawings

Fig. 1 is an end view of a rotary biological contactor embodying the invention;
Fig. 2 is a section on 2-2 in Fig. 1;
Fig. 3 is an enlarged Section on 3-3 in Fig. 1;
Fig. 4 is an enlarged section on 4-4 in Fig. 1;
Fig. 5 is an axial elevational view of one pattern of plastic media sheet, being schematic in that part-annular ribs are omitted, and flank corrugations are also omitted;
Fig. 6 is an enlarged detail at arrow 6 in Fig. 5;
Fig. 7 is a section on 7-7 in Fig. 6;
Fig. 8 is a section on 8-8 in Fig. 6;
Fig. 9 is an axial elevational view of another pattern of plastic media sheet, also (like Fig. 5) omitting ribs and flank corrugations;
Fig. 10 is an enlarged detail at arrow 10 in Fig. 9;
Fig. 11 is a section on 11-11 in Fig. 10;
Fig. 12 is a section on 12-12 in Fig. 10;
Fig. 13 is an enlarged section on 13-13 in Fig. 5;
Fig. 14 is an enlarged detail in the direction of arrow 14 in Fig. 13; and
Fig. 15 is a section on 15-15 in Fig. 14.

### Description of Preferred Embodiment

### 1. General (1)

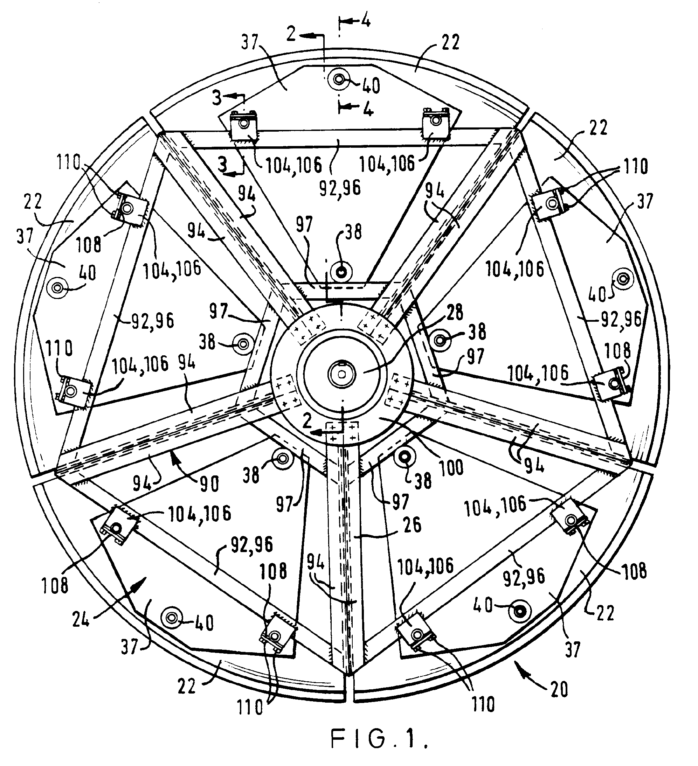

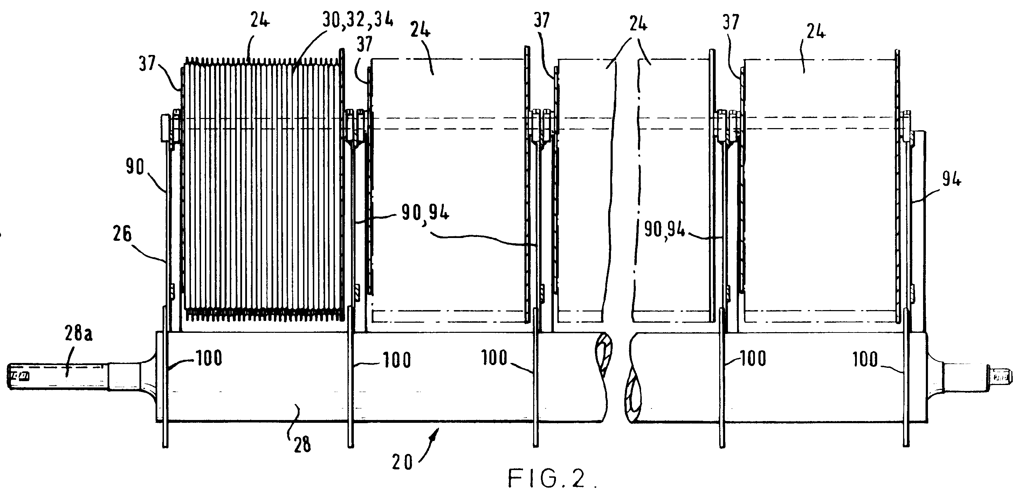

Referring to Figures 1 and 2, the illustrated rotary biological contactor ("RBC") 20 comprises several blocks 22 of plastic media, arranged in the form of a number of rings 24 with five such blocks 22 in each ring 24. The blocks 22 are mounted to, or supported on, a framework 26 which supported on a horizontal rotary shaft 28, with the rings 24 axially distributed along the shaft 28 and concentric thereto. One end 28a of shaft 28 is adapted to be driven by an electric motor (not shown) either directly or through a gearbox (not shown) to rotate the RBC 20. Fluid to be treated flows generally axially of the RBC so that one end is upstream and the other end is downstream.

### 2. The blocks 22 of plastic media (1)

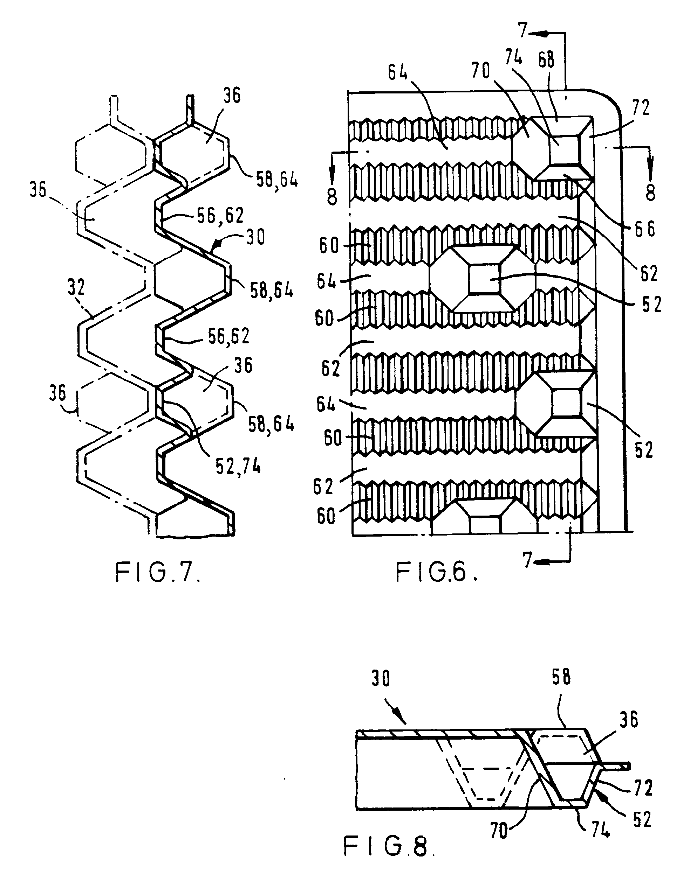

Referring to Figures 7 and 11, each block 22 of plastic media is in the form of a stack of sheets 30, 32 (or 30, 32, 34) of plastic media. Adjacent pairs 30, 32 or 32, 34 or 30, 34 of these sheets of plastic media define, between them, part-annular channels 36 which are substantially concentric to the axis of the shaft 28, and substantially concentric to each other, and which intercommunicate radially with each other, as will be described later. These channels 36 are for the through-flow of fluid to be biologically treated in use, when the RBC 20 is rotated.

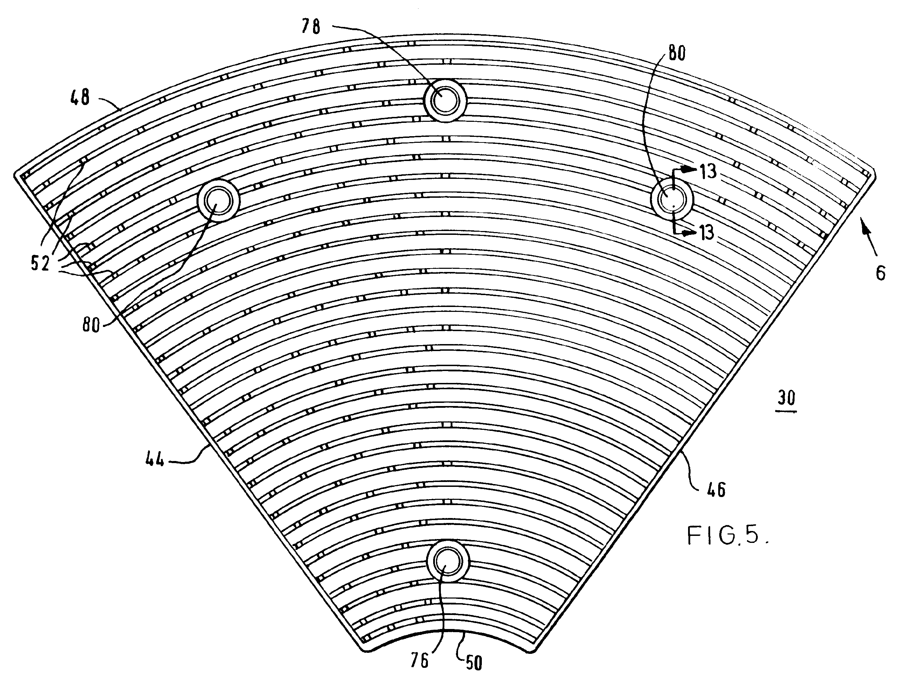

Referring to Figure 4, the stack of plastic sheets 30, 32 (or 30, 32, 34) in each block 22 are placed between two "kite-shaped" hexagonal end support plates 37. The sheets 30, 32 (or 30, 32, 34) together with the end support plates 37 are held together by two through-members 38, 40, each in the form of a plastic tube fitted with two end collars 42, 42. The support plates 37 aid the assembly of the sheets 30, 32 (or 30, 32, 34) to the plastic through-members 38, 40.

A sealant and/or adhesive bond is provided between a number of sheets, for example six, at each axial end of the stack, to avoid excessive movement and/or vibration, which might lead to fatigue problems, of those end sheets.

These end collars 42, 42, see Figure 1, which are of plastic welded on the plastic tubes 38, 40, serve an end-stops whereby the sheets 30, 32 (or 30, 32, 34) are held together in the stack. The tubes 38, 40 with collars 42 are not connected to the framework 26, except via the sheets 30, 32 (or 30, 32, 34) of plastic media. The tubes 38, 40 are located substantially on a radial centre plane of the block 22, the tube 38 being a radially-inner through-member and the tube 40 being a radially-outer through-member.

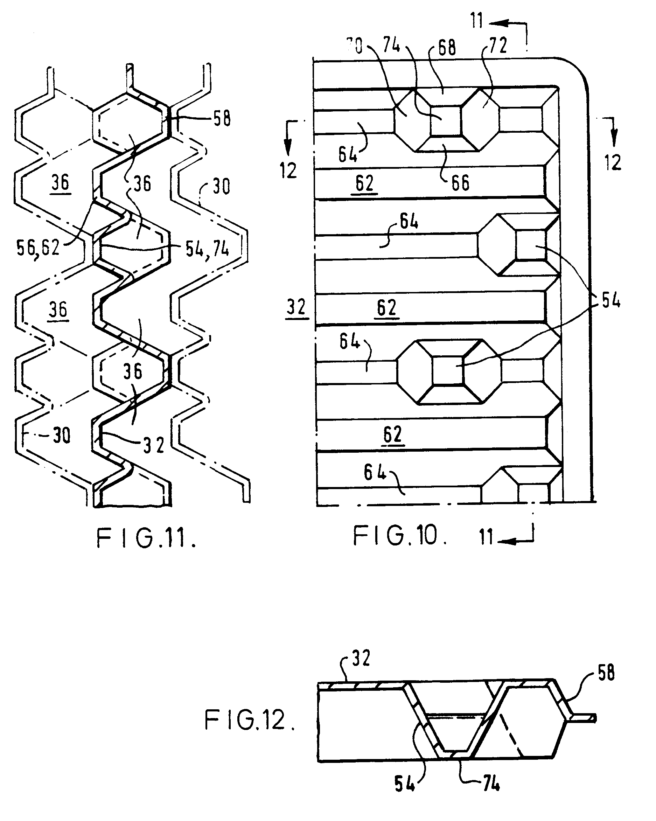

### 3. The sheets 30, 32, 34 of plastic media Figs. 5 to 15.

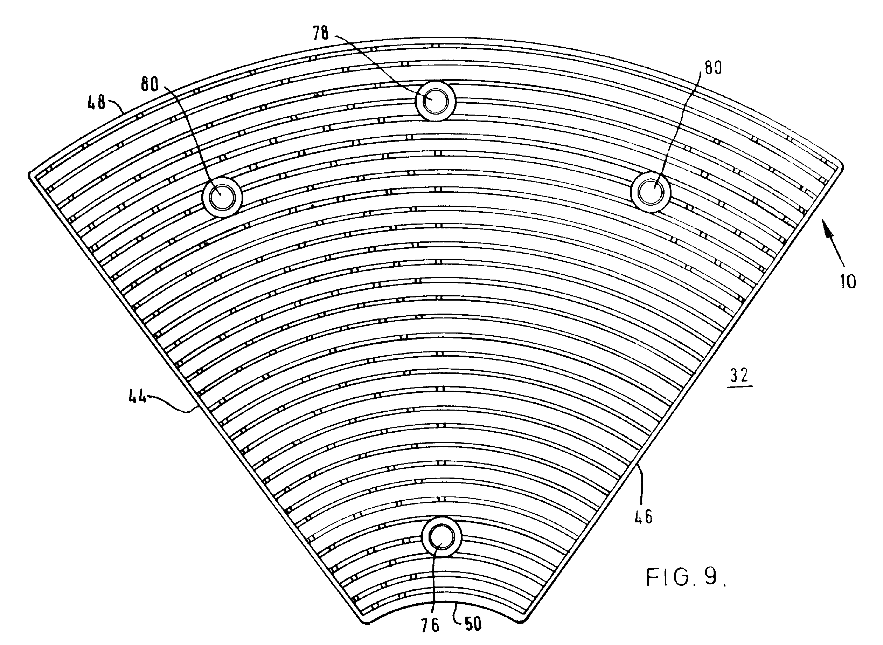

Each sheet 30, 32, 34 of plastic media (see Figures 5 and 9) is generally in the form of a sector of a circle, each sheet 30, 32, 34 having two radial edges 44, 46, an outer peripheral edge 48 and an inner peripheral edge 50. Each sheet 30, 32, 34 is concentric to, and normal to, the axis of the shaft 28.

Most of the sheets 30, 32, 34 are corrugated in either one pattern (sheets 30, Figs. 5 to 8) or another slightly different pattern (sheets 32, Figs. 9 to 12) but a few of the sheets are flat (sheets 34, not separately illustrated). All of the sheets 30, 32, 34 have the same outside dimensions.

Both patterns of sheets 30 and 32 (Figures 5, 6, 9 and 10) are the same except as regards the positioning of protruberances 52, 54 as described below.

Each pattern of sheets 30, 32 comprises concentric, part-annular, ribs 56 (as viewed on one face of the sheet 30, 32) alternating with concentric part-annular grooves 58. The sheets 30 alternate with the sheets 32 in the stack and all face the same way. That is, all the ribs 56 face the same way. The ribs 56 are omitted from Figs. 5 and 9 but are shown in Figs. 6-8 and 10-12 and 14.

The protruberances 52, 54 which are mentioned above are protruberances from the bottoms of the grooves 58 and protrude in the same direction as the ribs 56.

The pattern of the protruberances 52 of sheets 30 (Figs. 5 to 8) is different from the pattern of the protruberances 54 of sheets 32, however, so that the protruberances 52 are all in staggered positional relationship to the protruberances 54 as seen in axial elevation, that is, comparing Figs. 5 and 9.

Hence, referring to Figures 5 to 12, the protruberances 52 of sheets 30 contact the bases of the grooves 58 of sheets 32 and the protruberances 54 of sheets 32 contact the bases of grooves 58 of sheets 30, thereby spacing the sheets 30, 32 axially apart and providing mutual support. This contact is direct or, through intervening biomass, not shown, indirect. The stacking of the sheets 30 and 32 alternately with each other thus defines the concentric part-annular channels 36, intercommunicating radially with each other. The protruberances 52, 54 partially (but not completely) block the channels 36, so as to deflect fluid radially inwardly and/or radially outwardly from channel to channel, so that the fluid is subjected to a great deal of shear and is brought into maximum surface-to-surface contact with the biomass (not shown) and air, as the RBC 20 rotates in use.

The flanks 60 of the ribs 56 and grooves 58 are corrugated as shown, in order simultaneously to enhance the strength, and to increase the surface area, of each sheet 30, 32. However, they extend over the whole of each flank, preferably. Thus the corrugations extend over all the ribs 56 and grooves 58 except the crests 62 of ribs 56 and the bases 64 of grooves 58.

Each protruberance 52, 54 has four flanks, namely, radially inner and outer flanks 66, 68 and side flanks 70, 72 and a substantially flat crest 74. The crest 74 of each protruberance 52, 54 is level with the crests 62 of ribs 56. It is the crest 74 of each protruberance 52, 54, which engages the base of the groove 58 of the next adjacent sheet 32, 30 (see above).

Each sheet 30, 32, 34 (Figures 5 and 9) is formed with two holes 76, 78 on a central radius for the through-members 38, 40 respectively to extend through. Thus hole 76 is a radially-inner hole whilst hole 78 is a radially-outer hole.

Each sheet 30, 32, 34 is also formed with two holes 80, 80 for mounting purposes as described below. The holes 80, 80 are symmetrically spaced on either side of the central radius at the same radial distance as each other, but on different radiuses.

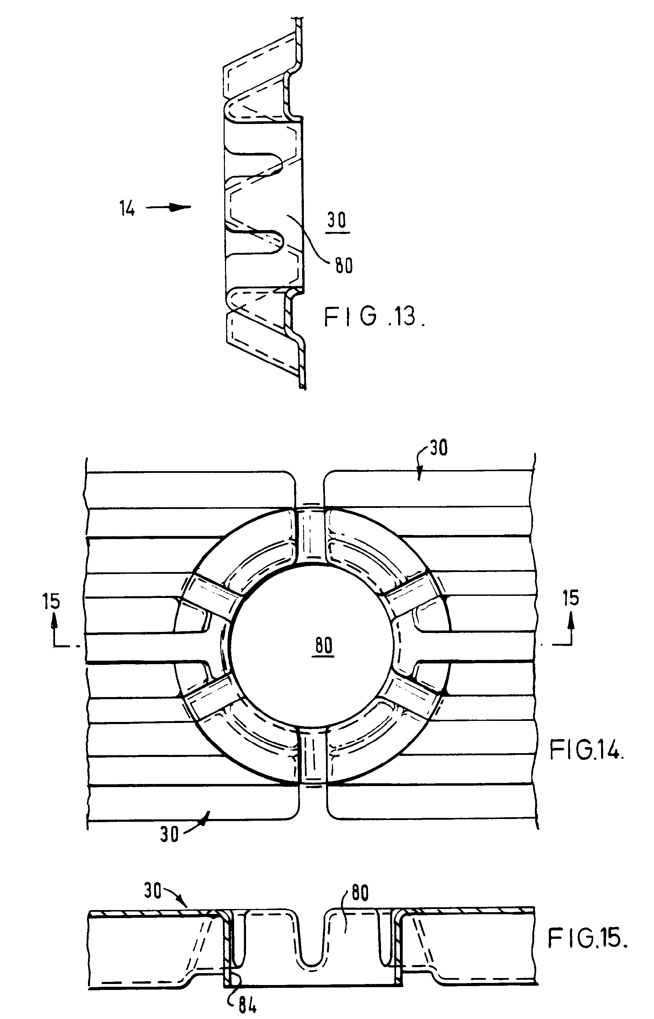

The edges of the holes 76, 78, 80, 80 (see Figures 13 and 15) all have flanges 84 reinforced with webbing.

### 4. The blocks 22 of plastic media (2)

Reference is made again to Figures 5 to 12. As mentioned above, the sheets 30 alternate with sheets 32 in the blocks 22. The crests 74 of the protruberances 52, 54 (of sheets 30, 32 respectively) engage the bases 64 of the grooves 58.

Interspersed between selected pairs of adjacent sheets 30, 32 (or 32, 30) may be occasional flat sheets 34, in which case the crests 62 of ribs 58 and crests 74 of protruberance 52, 54 engage (directly or, through biomass, indirectly) on the flat sheets 34.

A flat sheet 34 myr obviously be placed between a pair of identically-patterned sheets 30, 30 or 32, 32.

The holes 76, 78 line up together to receive the through-members 38, 40. Similarly the hole 80, 80 line up.

The blocks 22 need not all have sheets 30, 32 of the same depths of grooves 58 (and corresponding heights of ribs 56). Although it is preferred for all sheets 30, 32 in a given block 22 to have uniform and identical groove depth (and rib height), a so-called "coarse-hatch" block 22 may have greater groove depth (and rib height) in each sheet 30, 32 than so-called "fine-hatch" block 22. Coarse-hatch blocks 22 are used in the one or two rings 24 at the upstream end and fine-hatch blocks 22 in the remaining rings 24. The coarse-hatch blocks 22 carry more biomass than the fine-hatch blocks.

### 5. The framework 26

The framework 26 (Figures 1 and 2) is of metal and comprises a respective pair of axially-spaced-apart frames 90 for each ring 24 of blocks 22, located between the pair of frames 90. Each frame 90, except the two end frames 90, is located between, and is common to, two adjacent rings 24 of blocks 22.

Each frame 90 comprises five interconnected sub-frames 92. Each sub-frame 92 corresponds to, and supports, a respective one of the five blocks 22 in the or each associated ring 24.

Each sub-frame 92 comprises a pair of radial arms 94, 94 and outer and inner interconnecting members 96, 97 welded together in the general form of a trapezium. The radial arms 94 are secured as by bolts at 98 to annular flanges 100 on the shaft 28, there being one respective annular flange 100 for each respective frame 90.

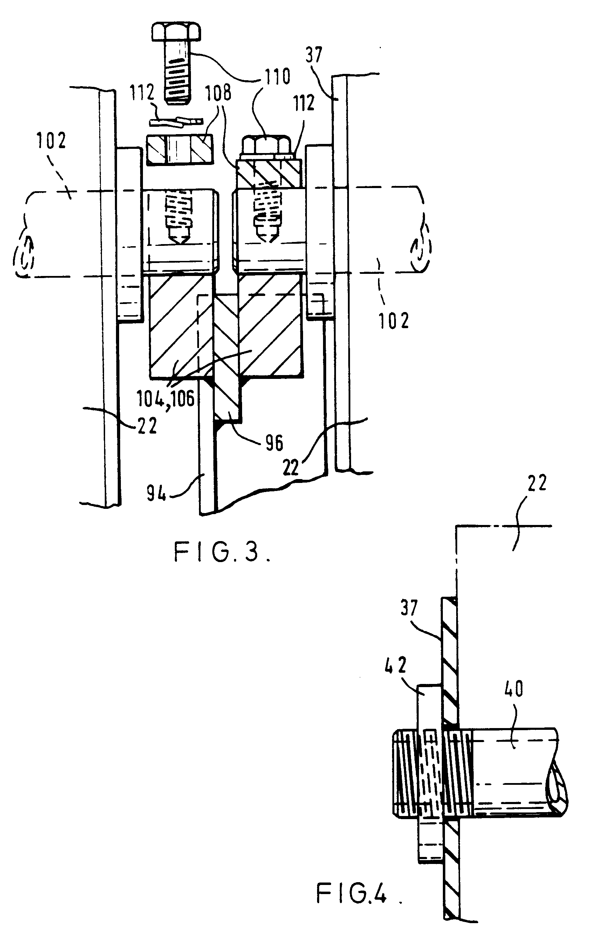

The framework 26 (Figures 1-3) also comprises a respective pair of tubular metal support members 102, 102 for each and every block 22 of plastic media. The pairs of support members 102, 102 extend parallel to the axis of shaft 28 through the holes 80, 80 of the sheets 30, 32 (or 30, 32, 34) in the stack, at the same radial distance as each other from the shaft axis. The metal support members 102, 102 are connected by brackets 104 (Figs. 1 and 3) at their opposite ends to the outer interconnecting members 96 of the two axially-aligned sub-frame 92, between which each plastic media block 22 is mounted respectively. The brackets 104 each comprise a seating 106 welded to the interconnecting member 96, a clamping bar 108, two bolts 110 and two corresponding spring washers 112. The end of the respective support member 102 is clamped between the seating 106 and the clamping bar 108, which is secured by the two bolts 110, 110 fitted with the washers 112, 112, projecting through two holes in clamping bar 108 into tapped holes in seating 106.

The support plates 37 (Figures 1-4) in the blocks 22 of plastic media provide some structural support between the plastic through-members 38, 40 and the metal support members 102, 102.

### 6. General (2)

Reference is made to Figures 1,2 and 5-12. With the framework 26 supporting the rings 24 of blocks 22 as described above, the RBC 20 is rotated by the motor (not shown) with the horizontal shaft 28 just above the level of the fluid being treated. Hence each block 22 of sheets 24 is alternatively dipped into the fluid and lifted into the air. The fluid thus flows through the channels 36, being deflected radially inwardly and/or outwardly from channel to channel by the protruberances 52, 54. Hence the fluid is subjected to shear and made turbulent, producing good surface-to-surface contact with the air and with the biomass which grows on the plastic media. The biomass also has good surface contact alternately with the fluid and with the air. Hence the fluid is biologically treated by the rotating RBC 20.

## Claims

1. A rotary biological contactor (20) comprising a plurality of blocks (22) of plastic media arranged in the form of a plurality of axially distributed rings (24) with a plurality of said blocks (22) in each respective ring, the blocks (22) being mounted to or supported on a framework (26) to rotate about a horizontal axis, an axially-extending shaft (28) on said axis supporting the framework (26), each block (22) being in the form of a stack of sheets (30, 32, 34) of plastic media, adjacent pairs of said sheets (30, 32, 34) defining, between them, channels (36) for fluid-flow, wherein the framework (26) comprises a plurality of axially-spaced-apart frames (90), each said ring (24) of blocks (22) being located between an associated pair of said frames (90), each frame (90) comprising a plurality of radial arms (94) and at least one interconnecting member (96, 97) extending between the radial arms (94), the framework (26) comprising axially extending support members (102), said support members (102) being supported by the frames (90), said support members (102) extending through holes (80) in, and thereby supporting, the stack of sheets (30, 32, 34) in each block (22), the radial arms (94) being bolted to flanges (100) on the shaft (28), characterised in that each frame (90) is formed as a plurality of interconnected sub-frames (92), and comprises a plurality of said interconnecting members (96, 97), each sub-frame (92) being associated with a respective one of said blocks (22) in the associated ring (24), each sub-frame (92) comprising a respective pair of said radial arms (94) and a respective one or two of said plurality of interconnecting members (96, 97), the or each said interconnecting member extending from one to the other of the pair of radial arms (94) and interconnecting the pair of radial arms (94), said support members (102) all being connected to said interconnecting members (96, 97) of said sub-frames (92), whereby each sub-frame (92) supports the associated block (22), each said block (22) comprising a plurality of through-members (38, 40), said through-members (38, 40) being separate from said support members (102), said through-members (38, 40) extending through further holes (76, 78) in the stack of sheets (30, 32, 34) and including respective pairs of end-stops (42) whereby the sheets (30, 32, 34) are held together in the stack.

2. A rotary biological contactor (20) as claimed in claim 1, wherein at least one of the axially-spaced-apart frames (90) lies between and is common to, and supports, two of the rings (24).

3. A rotary biological contactor (20) as claimed in claim 1 or 2, wherein the edges of the sheets (30, 32, 34) around the holes (76, 78) are reinforced.

4. A rotary biological contactor (20) as claimed in any preceding claim, wherein said support members (102) are all at the same radial distance as each other from the axis.

5. A rotary biological contactor (20) as claimed in any preceding claim, wherein said through-members (38, 40) are two in number per block (22), located substantially on a radial centre-plane of the block (22), being one radially-inner through-member (38) and one radially-outer through-member (40) respectively.

6. A rotary biological contactor (20) as claimed in any preceding claim, wherein each through-member (38, 40) is a plastic tube and the end-stops (42) are collars on the tube (38, 40).

7. A rotary biological contactor (20) as claimed in any one of claims 1 to 6, wherein the support members (102) are symmetrically positioned and are two in number per block.

## Patentansprüche

1. Ein rotierender biologischer Kontaktor (20), der aus einer Mehrzahl von Blöcken (22) aus plastischen Medien besteht, die in der Form einer Mehrzahl von axial-gestellten Ringen (24) angeordnet werden, mit einer Mehrzahl von gesagten Blöcken (22) in jedem betreffenden Ring, wobei die Blöcke (22) auf einem Gestell (26) gesetzt oder davon unterstützt werden, damit es sich um eine waagerechte Achse dreht, mit einer axial-verlängernden Welle (28) an der gesagten Achse, um das Gestell (26) zu unterstützen, wobei jeder Block (22) eine Zusammensetzung von Scheiben (30, 32, 34) aus plastischen Medien ausbildet, mit angrenzenden Paaren von gesagten Scheiben (30, 32, 34), die zwischen sich Rinnen (36) für Flüssigkeitsströmung aufweisen, worin das Gestell (26) aus einer Mehrzahl von axial-getrennten Rahmen (90) besteht, wobei jeder gesagte Ring (24) von Blöcken (22) zwischen ein zugeselltes Paar der gesagten Rahmen (90) eingeordnet wird, und wobei jeder Rahmen (90) aus einer Mehrzahl von Radialarmen (94) und wenigstens einem zusammenbindenden Glied (96, 97) besteht, das sich zwischen den Radialarmen (94) ausdehnt, wobei das Gestell (26) aus axial-verlängernden Unterstützungsgliedern (102) besteht, mit den gesagten Unterstützungsgliedern (102) von den Rahmen (90) unterstützt, wobei die gesagten Unterstützungsglieder (102) sich durch Löcher (80) in den zusammengesetzten Scheiben (30, 32, 34) in jedem Block (22) verlängern, damit sie sie unterstützen, mit den Radialarmen (94) an Flansche (100) an der Welle (28) verbolzt, charakterisiert dabei, dass jeder Rahmen (90) als eine Mehrzahl von zusammengebundenen Nebenrahmen (92) ausgebildet wird und aus einer Mehrzahl von gesagten zusammenbindenden Gliedern (96, 97) besteht, wobei jeder Nebenrahmen (92) mit einem Betreffenden der gesagten Blöcken (22) in dem zugesellten Ring (24) zugesellt wird, wobei jeder Nebenrahmen (92) aus einem betreffenden Paar von gesagten Radialarmen (94) und einem betreffenden einzelnen oder zwei von der gesagten Mehrzahl der zusammenbindenden Glieder (96, 97) besteht, wobei das oder jedes gesagte zusammenbindende Glied sich von einem zum anderen der gepaarten Radialarme (94) verlängt und die gepaarten Radialarme (94) zusammenbindet, wobei die gesagten Unterstützungsglieder (102) alle mit den gesagten zusammenbindenden Gliedern (96, 97) der gesagten Nebenrahmen (92) zusammengebunden werden, wobei jeder Nebenrahmen (92) den zugesellten Block (22) unterstützt und jeder gesagte Block (22) aus einer Mehrzahl von Durchgliedern (38, 40) besteht, mit den gesagten Durchgliedern (38, 40) getrennt von den gesagten Unterstützungsgliedern (102), wobei die gesagten Durchglieder (38, 40) sich durch weitere Löcher (76, 78) in der Zusammensetzung von Scheiben (30, 32, 34) verlängen und betreffende Paare von Endabsperrungen (42) einschliessen, wobei die Scheiben (30, 32, 34) in der Zusammensetzung zusammengehalten werden.

2. Ein rotierender biologischer Kontaktor (20), wie in Anspruch 1 beansprucht, worin wenigstens einer von den axial getrennten Rahmen (90) zwischen zwei von den Ringen (24) liegt, dazu normal ist, und sie unterstützt.

3. Ein rotierender biologischer Kontaktor (20), wie in Anspruch 1 oder 2 beansprucht, worin die Ränder der Scheiben (30, 32, 34) um die Löcher (76, 78) verstärkt werden.

4. Ein rotierender biologischer Kontaktor (20), wie in jeglichem vorhergehendem Anspruch behauptet, worin gesagte Unterstützungsglieder (102) sich alle zu derselben Radialweite wie einander von der Achse befinden.

5. Ein rotierender biologischer Kontaktor (20), wie in jeglichem vorhergehendem Anspruch behauptet, worin gesagte Durchglieder (38, 40) zwei pro Block (22) zählen, und wesentlich an einer radialen Zentralebene des Blockes (22) einordnen, wobei sie aus einem radial inneren Durchglied (38) und beziehungsweise einem radial äusseren Durchglied (40) bestehen.

6. Ein rotierender biologischer Kontaktor (20), wie in jeglichem vorhergehendem Anspruch behauptet, worin jedes Druchglied (38, 40) eine plastische Röhre ist, und die Endabsperrungen (42) Schellen an der Röhre (38, 40) sind.

7. Ein rotierender biologischer Kontaktor (20), wie in jedem beliebigen Anspruch 1 bis 6 behauptet, worin die Unterstützungsglieder (102) symmetrisch angeordnet werden, und zwei pro Block zählen.

## Revendications

1. Un contacteur biologique rotatif (20) comportant une pluralité de blocs (22) en matière plastique assemblés pour former une pluralité d'anneaux (24) répartis axialement avec une pluralité desdits blocs (22) dans chaque anneau respectif, les blocs (22) étant montés ou supportés sur une structure (26) afin de pivoter autour d'un axe horizontal, un arbre disposé axialement (28) sur ledit axe soutenant la structure (26), chaque bloc (22) ayant la forme d'une pile de feuilles (30, 32, 34) de matière plastique, des paires adjacentes desdites feuilles (30, 32 34) définissant, ente elles, des canaux (36) pour l'écoulement de liquide, où la structure (26) comprend une pluralité de cadres axialement espacés (90), chacun desdits anneaux (24) des blocs (22) se trouvant entre une paire associées desdits cadres (90), chaque cadre (90) comprenant une pluralité de bars radiaux (94) et au moins un élément d'interconnexion (96, 97) disposé entre les bras radiaux (94), la structure (26) comprenant des éléments de soutien disposés axialement (102), lesdits éléments de soutien (102) étant soutenus par les cadres (90), lesdits éléments de soutien (102) traversant les trous (80) de la pile de feuilles (30, 32, 34) et de ce fait la supportant, dans chaque bloc (22), les bras radiaux (94) étant boulonnés aux brides (100) sur l'arbre (28), caractérisé par le fait que chaque cadre (90) prend la forme d'une pluralité de sous-cadres interconnectés (92), et comprend une pluralité desdits éléments d'interconnexion (96, 97), chaque sous-cadre (92) étant associé avec un bloc respectif desdits blocs (22) dans l'anneau associé (24), chaque sous-cadre (92) comprenant une paire respective desdits bras radiaux (94) et un ou deux éléments respectifs de ladite pluralité d'éléments d'interconnexion (96, 97), le ou chacun desdits éléments d'interconnexion étant disposé de l'une à l'autre paire de bras radiaux (94) et interconnectant la paire de bras radiaux (94), lesdits éléments de soutien (102) étant tous connectés auxdits éléments d'interconnexion (96, 97) desdits sous-cadres (92), où chaque sous-cadre (92) soutient le bloc associé (22), chacun de ces blocs (22) comprenant une pluralité d'éléments traversants (38, 40) séparés desdits éléments de soutien (102), lesdits traversants (38, 40) traversant d'autres trous (76, 78) dans la pile de feuilles (30, 32, 34) et comprenant des paires respectives de butées d'extrémité (42) où les feuilles (30, 32, 34) sont maintenues ensemble dans la pile.

2. Un contacteur biologique rotatif (20) selon la revendication 1, où au moins un des cadres axialement espacés (90) se trouve entre et est commun à, et soutient, deux des anneaux (24).

3. Un contacteur biologique rotatif (20) selon les revendications 1 et 2, où les bords des feuilles (30, 32, 34) sont renforcés dans la périphérie des trous (76, 78).

4. Un contacteur biologique rotatif (20) selon les revendications précédentes, où la distance radiale desdits éléments de soutien (102) entre eux est la même que la distance par rapport à l'axe.

5. Un contacteur biologique rotatif (20) selon les revendications précédentes, où chaque bloc (22) a deux desdits éléments traversants (38, 40), situés essentiellement sur un plan central radial du bloc (22), avec un élément traversant plus à l'intérieur radialement (38) et un élément traversant plus à l'extérieur radialement (40) respectivement.

6. Un contacteur biologique rotatif (20) selon les revendications précédentes, où chaque élément traversant (38, 40) est un tube de plastique et les butées d'extrémité (42) sont des manchons placés sur le tube (38, 40).

7. Un contacteur biologique rotatif (20) selon les revendications précédentes 1 à 6, où les éléments de soutien (102) sont symétriquement placés et sont deux par bloc.
